# EUROPEAN PATENT APPLICATION

(11) **EP 1 577 547 A1**
(43) Date of publication of application: **21.09.2005**
(21) Application number: 03811559.8
(22) Date of filing: 01.08.2003
(51) Int. Cl.: F03D 3/04

(54) **ROTOR WIND PLANT**

(30) Priority: 19.11.2002 RU 2002130846
(71) Applicant: Ivanayskiy, Aleksey Vasilyevich, Moscow, 127540 (RU); Ivanayskaya, Tatyana Sergeevna, Moscow, 127540 (RU); Ivanayskiy, Vladimir Alekseevich, Moscow, 127540 (RU)
(72) Inventor: Ivanayskiy, Aleksey Vasilyevich, Moscow, 127540 (RU); Ivanayskaya, Tatyana Sergeevna, Moscow, 127540 (RU); Ivanayskiy, Vladimir Alekseevich, Moscow, 127540 (RU)
(74) Representative: Petraz, Gilberto Luigi
(86) International application number: PCT/RU2003/000344
(87) International publication number: WO 2004/046545

(57) **Abstract**

The invention relates to power engineering, particularly - to designs of wind-mill electric generating units, wherein the rotor rotation axis is vertical. The technical result - being an enhanced entirety of utilisation of the wind flow energy, provision of flexible control of the mode of delivery of electrical power to a consumer, a simplified design of a wind-driven power plant and a simpler operation thereof - is achieved by the invention, according to which in a rotor wind-driven power plant that includes: a guiding device having bent vanes, and a rotor having bent blades and whose shaft being mechanically coupled to the power generator shaft; said plant is inventively distinctive in that the rotor blades are implemented in the form of aerodynamic wings positioned with a gap with respect to said rotor shaft. The guiding device vanes are also implemented in the form of aerodynamic wings. Both the vanes and blades have their concave surfaces oriented in the opposite circumferential directions. The wind-driven power plant is implemented as at least one module, each of said at least one module consisting of a rotor and guiding device, the device vanes being positioned at an angle of 40-60° with the wind flow entry, and at an angle of 30-80° with the wind flow exit.

## Description

### Field of the Invention

The invention relates to the art of power engineering, in particular - to designs of wind-mill electric generating units, wherein axes of rotation of their rotors are vertical and perpendicular to the wind flow direction; and the invention can be suitably used for power generation at wind-driven power plants, with delivery of power both to private and public utility systems.

### Background of Invention

Known is a wind-driven motor that comprises: a rotor having curved blades, a guiding device operable to slew with respect to the rotor and implemented in the form of two sets of vanes, in each of the sets the length of their vanes increasing in the rotor rotation direction; and a wind cock disposed in the plane that extends between the vane sets (SU 985402A).

In said known wind-driven motor, a portion of the wind flow directly impacts on the bent surfaces of the rotor blades, the other portion thereof being caught by the guiding device and via vanes of said device being conveyed onto the rotor blades, which approach ensures a more complete utilisation of the wind energy.

Among drawbacks of the known apparatus, the following its disadvantage should be mentioned: this apparatus is not able to operate without a wind cock whose presence complicates its design and increases its sluggishness.

The necessity to use vanes of different lengths also sophisticates the design, and the fact that the wind onflow proceeds actually at right angle with the blades' surface results in that the blades are subjected to impact and, hence, brings about the backflows.

Furthermore, the rotor blades along their entire length are planar, i.e. the aerodynamics requirements are not met.

Also known is a wind-driven motor whose turbine is constituted by a series of profiled axially symmetric blades, and is disposed within a guiding system, which system consists of a number of fixedly mounted guiding flaps; each one of the turbine blades being a portion of a cylinder lateral surface; cross section of each one of said flaps having the sinusoid profile; and blades' edges being oriented such that they provide a smooth flow-over of the air from the guiding flaps onto the turbine blades (RU 2168059 C2).

As distinct from the former apparatus, this wind-driven motor is capable of operating without a wind cock, which circumstance improves its manoeuvrability and simplifies manufacture thereof.

However, in this apparatus, entirety of utilisation of the wind energy is not sufficient, which is one of the main disadvantages of this prior-art apparatus.

In terms of the technical essence, the apparatus most proximate to this invention is a unit for converting the wind energy into the electrical one, being a rotor wind-driven power plant that consists of: a rotor having curved blades and positioned on a vertical axle geared into the power generator shaft, and of a guiding device that partially encloses the rotor and represents a series of bent vanes whose cross section and length are different and depend on the angle whereat the rotor is enclosed by the guiding device. This known apparatus provides a smooth onflow of the wind onto the rotor blades, utilisation of its energy and discharge of the spent flow in the vertical direction along the rotor axis (DE 19739921 A1).

The wind flow travel pattern provided for within this known apparatus improves the wind utilisation efficiency, but not to entirety.

Besides, in this known apparatus, due to the presence of a lone rotor, the takeoff power cannot be varied, i.e. operation in the flexible power delivery mode cannot be ensured when a value thereof is strictly specified by a consumer.

Another drawback of this known apparatus consists in that the apparatus has to slew as a wind flow direction changes, which circumstance makes its design more expensive and causes sluggishness of its operation.

This design is further complicated by the necessity to provide a set of vanes having different geometrical parameters.

### Disclosure of the Invention

This invention is directed to eliminate the above-mentioned drawbacks of the most pertinent art, that is: to enhance entirety of the wind flow energy utilisation, provide a flexible control of mode of power delivery for a consumer, simplify the wind-driven power plant design and operation thereof.

Said objective is to be accomplished as follows:
In a rotor wind-driven power plant that includes a guiding device having bent vanes, and a rotor having bent blades and whose shaft being mechanically coupled to the power generator shaft; according to the invention the rotor blades are implemented in the form of aerodynamic wings facing the rotor shaft and positioned with a gap with respect to said shaft, and the guiding device vanes are also implemented in the form of aerodynamic wings but facing the device periphery; both the vanes and blades have their concave surfaces oriented in the opposite circumferential directions, and the wind-driven power plant itself is implemented as at least one module, each of said at least one module consisting of a rotor and guiding device, the device vanes being positioned at an angle of 40-60° with the wind flow entry, and at an angle of 30-80° with the wind flow exit.

### Brief Description of Drawings

Fig. 1 shows a general view of the claimed wind-driven power plant.
Fig. 2 shows cross section of the plant taken along A-A line of Fig. 1.
Fig. 3 shows the rotor blade profile, its geometric characteristics being indicated.

### The Best Mode for Embodying the Invention

The claimed wind-driven power plant (Fig. 1) is implemented as at least one module, each of said at least one module consists of rotor 1 having the vertical rotation axis, and of annular guiding device 2 coupled to said rotor. The modules are interconnected through detachable joints and mounted on common shaft 3.
The upper end of shaft 3 has tachogenerator 4 mounted thereon, and lightning arrester 5 is attached on top of the station.

In generator compartment 6, on shaft 7 coupled to shaft 3 installed are sets of power generators 8 (one-, two- or multi-tiered power generators). Load of generators 8 is outputted via a converter (for clarity not shown) and controller 9, both electrically connected to distributing board 10. Generators 8 are further connected to storage battery 11 and current-conducting busbars 12.

Blades 13 of rotor 1 (Fig. 2) are implemented in the form of aerodynamic wings that face axis of rotor 1's shaft 3 and are positioned with a gap with respect to shaft 3; vanes 14 of guiding device 2 are also implemented in the form of aerodynamic wings facing away from shaft 3 of rotor 1, i.e. outwards from guiding device 2.

Vanes 14 of guiding device 2 are positioned at an angle of 40-60° with the wind flow 15 entry, and at an angle of 30-80° with the wind flow exit; and with respect to blades 13 of rotor 1, vanes 14 of guiding device 2 are oriented in the opposite circumferential directions, i.e. such that, for instance, the concave surfaces of blades 13 are oriented clockwise, and those of vanes 14 - counterclockwise.

Profile of each rotor vane (Fig. 3) has the relationship with its length, expressed by the following ratios:
x₁ = 0.519b, x₂ = 0.489b,
r₁ = 0.663b, r₂ = 0.553b,
y₁ = 0.463b, y₂ = 0.215b,
z₁ = 0.139b, z₂ = 0.338b, R = 0.035b,
where b is length of a vane; x₁, y₁, x₂, y₂ are coordinates of centres of the circumferences having radii r₁, r₂ that define, respectively, the nether and upper boundaries of the vane profile; z₁ is the vane profile width in its apex, distance to which apex from the horizontal axis is z₂; R is the radius of roundness of one of the profile sides. Advantageously, number of blades is at least 12 blades.

The outside diameter of guiding device 2 advantageously at least 1.3 times exceeds that of rotor 1.

This wind-driven power plant operates as follows:
The wind flow comes onto vanes 14 of guiding device 2, accelerates on said vanes and goes to blades 13 of rotor 1, where said flow transforms into the vortex flow that, having given up its energy to blades 13, leaves the rotor interior in the vertical direction.

As the wind flows about any geometrical bodies, said flowing-about is known to create vertices, and when a vortex air flow is generated, its velocity increases several times as compared with the wind speed when the wind enters the unit; the fastest velocity being observed on the rotor blades, while along the rotor axis (in its central part), the wind flow velocity is practically nought, which phenomenon is used to remove the spent air flow in the vertical direction - along the unit axis. Such use of the vortex flow according to the invention allows maximise efficiency of the wind energy conversion into mechanical energy, and the generators' set provides an high efficiency at all speeds of the wind.

### Industrial Applicability

The claimed invention can have suitable application for generating electrical power at wind-driven power plants, the output being delivered both to private and public utility systems.

## Claims

1. A rotor wind-driven power plant that includes a guiding device having bent vanes, and a rotor having bent blades and whose shaft being mechanically coupled to a power generator shaft;
**characterised in that** the rotor blades are implemented in the form of aerodynamic wings positioned with a gap with respect to said rotor shaft, and the guiding device vanes are also implemented in the form of aerodynamic wings; both the vanes and blades have their concave surfaces oriented in the opposite circumferential directions, and the wind-driven power plant is implemented as at least one module, each of said at least one module consisting of a rotor and guiding device, the device vanes being positioned at an angle of 40°-60° with the wind flow entry, and at an angle of 30°-80° with the wind flow exit.
